# EUROPÄISCHE PATENTSCHRIFT

(11) **EP 1 651 735 B1**
(45) Veröffentlichungstag und Bekanntmachung des Hinweises auf die Patenterteilung: **27.09.2006**
(21) Anmeldenummer: 04737403.8
(22) Anmeldetag: 30.07.2004
(51) Int. Cl.: C09J 5/06, B29C 65/20, E06B 3/96

(54) **VERFAHREN ZUM SPALTÜBERBRÜCKENDEN VERBINDEN VON HOHLPROFILEN**
METHOD FOR JOINING HOLLOW SECTIONS USING A GAP-BRIDGING JOINT
PROCEDE D'ASSEMBLAGE DE PROFILES CREUX PAR PONTAGE DE FENTES

(30) Priorität: 04.08.2003 AT 12342003
(43) Veröffentlichungstag der Anmeldung: 03.05.2006
(73) Patentinhaber: Katzengruber, Gerhard, 3382 Mauer/Loosdorf (AT)
(72) Erfinder: SÜNDERMANN, Franz, A-3244 Ruprechtshofen (AT); KATZENGRUBER, Gerhard, 3382 Mauer/Loosdorf (AT)
(74) Vertreter: Sonn & Partner Patentanwälte
(86) Internationale Anmeldenummer: PCT/AT2004/000273
(87) Internationale Veröffentlichungsnummer: WO 2005/012453

(56) Entgegenhaltungen:
- EP-A- 0 197 845
- DE-A- 3 906 278

## Beschreibung

Die vorliegende Erfindung betrifft ein Verfahren zum spaltüberbrückenden Verbinden von Hohlprofilen, vorzugsweise zur Herstellung von Fenster- oder Türrahmen bzw. Fensterflügeln.

Insbesondere bei der Herstellung von Fenster- oder Türrahmen aus Kunststoff (z.B. aus PVC) wird gemäß Stand der Technik mit Schweißverfahren gearbeitet. Hierbei wird ein Hohlprofil zumeist unter Vorsehung einer Gehrung auf die gewünschte Länge abgelängt, in eine herkömmliche Kunststoffschweißmaschine eingebracht, dort mittels Anpressen an einen Heizspiegel auf Schmelztemperatur erwärmt und mittels Druck mit einem (ebenfalls auf Schmelztemperatur erwärmten) zweiten bzw. mehreren Profilen zu einem Fensterrahmen oder Türrahmen zusammengefügt. Durch das Zusammenfügen der Profile kommt es zu einem gewissen Materialschwund, da beim Zusammendrücken der Profile das auf Schmelztemperatur erwärmte Kunststoffmaterial unter Vorsehen eines Wulstes verschmilzt und demgemäß das zusammengeschweißte Profil hinsichtlich seiner Länge etwas kürzer ist als das unverschweißte Profil. Es muss also bei der Verwendung von Schweißverfahren der durch Verschweißen notwendigerweise vorgebene Materialschwund einberechnet werden, so dass für das unverschweißte Profil beim Ablängen immer eine geringfügig größere Dimension vorgesehen werden muss als der fertige Rahmen dann tatsächlich aufweist.

Die EP 0 197 845 A offenbart ein Verfahren zum Zusammenfügen zweier Oberflächen durch eine Klebeverbindung.

Gemäß der DE 39 06 278 A werden Profile insbesondere winkelig zueinander dadurch miteinander verbunden, dass diese an der Verbindungsstelle mit Schnittflächen versehen, an die Schnittflächen eine Verbindungsfolie angelegt, die Verbindungsfolie mit dem Schnittflächenbereich der Profilteile erwärmt und die Profilteile so zusammengedrückt werden, dass eine feste Verbindung zwischen den Profilteilen über deren Schnittflächen und die dazwischen eingefügten Verbindungsfolien erfolgt.

Aufgabe der vorliegenden Erfindung ist es nun ein Verfahren zu entwickeln, bei welchem die bereits vorhandenen Maschinen weiter verwendet werden können, insbesondere die zur Verschweißung des Rahmens vorgesehenen Kunststoffschweißmaschinen. Weiters soll das Verfahren geeignet sein die Taktzeiten des herkömmlichen Schweißverfahrens einhalten zu können, um die Produktivität des Verfahrensablaufes nicht nachträglich zu beeinträchtigen.

Überraschenderweise wurde nun gefunden, dass durch ein Verfahren umfassend die folgenden Schritte:
- Ablängen des Hohlprofils auf die gewünschte Länge, gegebenenfalls unter Vorsehung einer Gehrung,
- Aufbringen eines nachvernetzenden Heißklebers auf die Stirnseite des Hohlprofils zur Vorsehung einer Beschichtung,
- gegebenenfalls thermische Reaktivierung der Beschichtung und
- Zusammenfügen von zumindest zwei stirnseitig beschichteten Hohlprofilen in einem gewünschten Winkel unter Druck
diesen Anforderungen gut entsprochen werden kann, durch die erfindungsgemäße Verwendung eines nachvernetzenden Heißklebers kann eine elastische Verbindung zwischen den Hohlprofilen vorgesehen werden, welche bereits nach zwei Stunden die halbe Endfestigkeit aufweist und wobei eine Handhabbarkeit bereits nach unter vier Minuten gegeben ist.

Gemäß der bevorzugten Ausführungsform der vorliegenden Erfindung wird als nachvernetzender Heißkleber ein Heißkleber auf Polyurethanbasis verwendet. Ein derartiger Heißkleber vernetzt mit Luftfeuchtigkeit und weist sehr gute Temperatureigenschaften auf. Ein Beispiel eines derartigen Heißklebers ist das Produkt hotstuff QR 23521 S, erhältlich von Fa. Franz Sündermann, AT.

Gemäß einer weiteren bevorzugten Ausführungsform des erfindungsgemäßen Verfahrens wird als nachvernetzender Heißkleber ein Heißkleber auf Polyolefinbasis verwendet.

Bei beiden oben beschriebenen Heißklebern wurde gefunden, dass diese spaltüberbrückende Eigenschaften aufweisen und eine ausgezeichnete Verklebung vorsehen. Beim Ablängen von Hohlprofilen zur Vorsehung von Fenster- oder Türrahmen kommt es immer wieder vor, dass die Gehrungsschnitte zur Vorsehung des gewünschten Winkels (zumeist eines rechten Winkels) nicht 100%ig genau ausgeführt werden, so dass beim Zusammenfügen der Profile ein geringer Spalt offen bleiben kann. Bei einem im Stand der Technik verwendeten Schweißverfahren gleicht sich dieser Spalt durch das Zusammenschieben des auf Schmelztemperatur erwärmten Kunststoffmaterials aus, wobei jedoch der Nachteil besteht, dass sich die Dimension des Profils ändert. Andererseits wird durch ein Schweißverfahren aber auch sichergestellt, dass auch die im Inneren des Profils vorhandenen Versteifungsstege miteinander verschmelzen und so eine dauerhafte Verbindung ergeben. Durch das erfindungsgemäße Verfahren wird jedoch erstmals ein Klebeverfahren zur Verfügung gestellt, durch welches nicht nur die ursprüngliche Dimension des Hohlprofils beibehalten werden kann, das heißt, dass durch das Ablängen des Profils bereits die spätere tatsächliche Breite bzw. Höhe des Fensterrahmens vorgesehen wird, sondern welches auch durch die Verwendung des spaltüberbrückenden nachvernetzenden Heißklebers eine Verklebung der im Hohlprofil vorhandenen Versteifungs- bzw. Verstärkungsstege vorsieht.

Weiters wird bevorzugt, dass die Aufbringung des nachvernetzenden Heißklebers durch Vorbeiführen der Stirnseite des Hohlprofils an einer mit dem Heißkleber beschichteten Heizwalze erfolgt. Dadurch wird sicher gestellt, dass es zu einem sparsamen Kleberauftrag auf die Stirnseite des Profils kommt, ohne dass das Profil durch überschüssigen Kleber verunreinigt wird. Bei der Aufbringung des nachvernetzenden Heißklebers durch eine Heizwalze handelt es sich um eine bevorzugte Ausführungsform des erfindungsgemäßen Verfahrens, genauso ist es möglich den Heißkleber beispielsweise durch kontrolliertes Eintauchen der Stirnseite des Hohlprofils in eine Wanne mit flüssigem Heißkleber vorzusehen oder auch den Kleber mittels Düsen auf die Stirnseite des Hohlprofils aufzubringen. An sich ist jegliche im Stand der Technik bekannte Ausführungsform möglich und denkbar, solange der Kleber in einer definierten Menge bei einer geeigneten Temperatur aufgebracht werden kann. Dabei sind insbesondere die Temperatureigenschaften des Klebers bzw. des Hohlprofils zu beachten. Insbesondere bei Verwendung einer Heizwalze ergibt sich der Vorteil, dass der Kleber nur kurz Luftsauerstoff bzw. Luftfeuchtigkeit ausgesetzt wird, so dass eine mögliche Zersetzung bzw. unerwünschte vorzeitige Vernetzung hintangehalten wird.

Vorzugsweise wird die thermische Reaktivierung der Beschichtung durch Erwärmen derselben auf eine Temperatur von mindestens 60°C vorgesehen. An sich ist eine thermische Reaktivierung bei genügend rascher Einbringung des mit Heißkleber beschichteten Profils in die Schweißmaschine nicht unbedingt nötig, durch den Schritt der thermischen Reaktivierung besteht jedoch der Vorteil, dass die abgelenkten und bereits mit Klebstoff stirnseitig beschichteten Hohlprofile vor der Weiterverarbeitung gelagert werden können, wodurch eine Flexibilität des Produktionsablaufes vorgesehen wird. Nach Einbringen des beschichteten Hohlprofils in die Schweißmaschine wird der nachvernetzende Heißkleber durch Kontakt, z.B. mit dem Schweißspiegel oder mit den zur Vorwärmung des Profils vorgesehenen Heizbacken, thermisch reaktiviert und erreicht innerhalb kürzester Zeit die maximale Klebekraft. Erfahrungsgemäß beträgt der Zeitraum, bis zu welchem eine thermische Reaktivierung des Klebers noch möglich ist, bis zu zwei Stunden, dieser Wert ist jedoch bei den verschiedenen nachvernetzenden Heißklebern unterschiedlich, so können auch längere oder kürzere Zeiten vorgesehen bzw. erzielt werden.

Vorzugsweise erfolgt das Zusammenfügen von zumindest zwei stirnseitig beschichteten Hohlprofilen in einem gewünschten Winkel unter einem Druck von 0,1 bis 5 bar. Die Untergrenze des Druckbereichs ergibt sich aus der Notwendigkeit die Stirnseiten der Hohlprofile miteinander in Kontakt zu bringen, hinsichtlich der Obergrenze wurde gefunden, dass bei Überschreitung eines Drucks von 5 bar der nachvernetzende Heißkleber aus dem gegebenenfalls zu überbrückenden Spalt zwischen den Stirnseiten der Hohlprofile herausgedrückt wird und demnach nicht genug Kleber für eine dauerhafte Verklebung im Spalt verbleibt.

Günstig ist auch, wenn als Hohlprofil ein Kunststoffhohlprofil, vorzugsweise ein PVC- oder Polypropylen-Hohlprofil, verwendet wird. Überaschenderweise hat sich ergeben, dass speziell bei Kunststoffprofilen der erfindungsgemäß verwendete nachvernetzende Heißkleber eine Klebekraft aufweist, die der Verschweißung gemäß den Verfahren im Stand der Technik gleich kommt (siehe nachfolgendes Beispiel).

Vorzugsweise wird als Hohlprofil ein Metallhohlprofil, vorzugsweise ein Aluminium-Hohlprofil verwendet. Bislang wurden im Stand der Technik Hohlprofile aus Aluminium bzw. Metall durch mechanische Verbindungen hergestellt, so wurden diese beispielsweise verschraubt oder durch Versteifungswinkel verbunden. Durch das erfindungsgemäße Verfahren ist es erstmals möglich auch Metall (vorzugsweise Auluminium) - Hohlprofile in handelsüblichen Kunststoffschweißmaschinen zu Rahmen zusammenzufügen. Dadurch ergibt sich eine auffällig hohe Flexibilität im Arbeitsablauf, da Aluminium-Hohlprofile in der gleichen Maschine verarbeitet werden können wie Kunststoffhohlprofile.

Weiters ist gemäß einer bevorzugten Ausführungsform des erfindungsgemäßen Verfahrens vorgesehen, das als Hohlprofil ein Sandwichhohlprofil, bestehend aus einer Kombination von zumindest zwei Materialien ausgewählt aus der Gruppe umfassend Kunststoffe, vorzugsweise PVC, Polypropylen, Melamin und Kunstmarmor, Metalle, vorzugsweise Aluminium, Holz und Naturstein, verwendet wird. Auch hier ergibt sich erstmals bei der Verwendung des erfindungsgemäßen Verfahrens die Möglichkeit derartige Sandwichhohlprofile in einer herkömmlichen Schweißmaschine zur Herstellung von Kunststofffenster- bzw. Türrahmen herzustellen, da bislang auf einer herkömmlichen Schweißmaschine eben nur Kunststoffe verbunden werden konnten. Erstmals wird durch das erfindungsgemäße Verfahren die Möglichkeit geschaffen eine Vielzahl von Materialien zu einem Hohlprofil zusammenzufügen, welches Hohlprofil dann in einer herkömmlichen Maschine weiter verarbeitet wird. Insbesondere ist das erfindungsgemäße Verfahren dahingehend flexibel, dass auch "offene" Hohlprofile verklebt werden können, welche anschließend, ebenfalls unter Verwendung des erfindungsgemäß zum Einsatz kommenden nachvernetzenden Heißklebers, zu einem "geschlossenen" Hohlprofil, also zum Fensterrahmen verklebt werden. Selbstverständlich erfordern die verschiedenen verwendbaren Materialien unterschiedliche Klebebedingungen.

Weiters ist es günstig, wenn beim erfindungsgemäßen Verfahren als Hohlprofil ein Hohlprofil mit einem Einlageprofil bestehend aus Kunststoff, vorzugsweise geschäumten Polyurethan, oder Metall, vorzugsweise verzinktem Stahl oder Aluminium, bzw. auch Leichtbeton oder andere Verfüllmaterialien, verwendet wird. Gemäß Stand der Technik werden insbesondere Kunststoffhohlprofile zur zusätzlichen Versteifung und/oder Wärmedämmung bzw. Lärmschutz mit einem Einlageprofil versehen, wobei hier insbesondere das Problem besteht, dass beim Verschweißen zur Vorsehung eines Rahmens durch den verfahrenstechnisch gegebenen Materialschwund die Länge des Einlageprofils von vornherein geringer sein muss als die abgelängte Dimension des Kunststoffhohlprofiles, da ansonsten - aufgrund der Dimensionsverringerung des Hohlprofils während des Verschweißens - die Verstärkungsprofile überdimensioniert wären. Erst bei Verwendung des sozusagen dimensionsstabilen erfindungsgemäßen Verfahrens kann bereits vor dem Ablängschritt ein Einlageprofil in das Hohlprofil eingebracht werden, da durch das erfindungsgemäße Verfahren erstmals vorgesehen wird, dass die Zusammenfügung der Hohlprofile ohne Veränderung der Dimensionen erfolgt. In gleicher Weise kann auch ein "offenes" (das heißt längshalbiertes) Hohlprofil zu einem Rahmen zusammengefügt, das heißt geklebt, werden, in welchen offenen Rahmen dann ein beispielsweise vorverschweißtes Stahl-Einlageprofil eingelegt wird, wonach der Fensterrahmen durch aufkleben des zweiten Teils des - ebenfalls bereits zu einem Rahmen zusammengefügten - Hohlprofils erfolgt.

Ein mittels des erfindungsgemäßen Verfahrens zusammengefügtes Hohlprofil in Form eines Winkels wurde einer Festigkeitsprüfung unterzogen.
die Profile wurden laut nachfolgenden Prüfbestimmungen zugeschnitten, der Heißkleber (hotstuff QR 23521 S, erhältlich von Fa. Franz Sündermann, AT) wurde auf die Stirnseiten der beiden Hohlprofile manuell aufgebracht und zusammengefügt. Die Fügezeit betrug ca. vier Minuten, der Anpressdruck ca. 0,4 bar. Für das verwendete Profil Accord MD 85 ist eine Mindestbruchkraft (Gütesicherung RAL-GZ 716/1) von 3950 N vorgeschrieben. Nach 2 Stunden betrug die Festigkeit ca. 50% der vorgeschriebenen Bruchkraft, nach 24 Stunden wurden beim durchgeführten Versuch im Mittel 4400 N Bruchkraft erreicht. Keiner der Prüfkörper lag unter der Mindestbruchkraft.

## Patentansprüche

1. Verfahren zum spaltüberbrückenden Verbinden von Hohlprofilen, welches Verfahren die folgenden Schritte umfasst:
• Ablängen des Hohlprofils,
• Aufbringen eines nachvernetzenden Heißklebers auf die Stirnseite des Hohlprofils zur Vorsehung einer Beschichtung,
• Zusammenfügen von zumindest zwei stirnseitig beschichteten Hohlprofilen in einem Winkel unter Druck.

2. Verfahren nach Anspruch 1 zur Herstellung von Fenster- oder Türrahmen bzw. Fensterflügeln.

3. Verfahren nach Anspruch 1 oder 2, **dadurch gekennzeichnet, dass** nach dem Aufbringen eines nachvernetzenden Heißklebers auf die Stirnseite des Hohlprofils diese Beschichtung thermisch reaktiviert wird.

4. Verfahren nach einem der Ansprüche 1 bis 3, **dadurch gekennzeichnet, dass** das Hohlprofil unter Vorsehung einer Gehrung abgelängt wird.

5. Verfahren nach einem der Ansprüche 1 bis 4, **dadurch gekennzeichnet, dass** als nachvernetzender Heißkleber ein Heißkleber auf Polyurethanbasis verwendet wird.

6. Verfahren nach einem der Ansprüche 1 bis 4, **dadurch gekennzeichnet, dass** als nachvernetzender Heißkleber ein Heißkleber auf Polyolefinbasis verwendet wird.

7. Verfahren nach einem der Ansprüche 1 bis 6, **dadurch gekennzeichnet, dass** die Aufbringung des nachvernetzenden Heißklebers durch Vorbeiführen der Stirnseite des Hohlprofils an einer mit dem Heißkleber beschichteten Heizwalze erfolgt.

8. Verfahren nach einem der Ansprüche 1 bis 7, **dadurch gekennzeichnet, dass** die thermische Reaktivierung der Beschichtung durch Erwärmen derselben auf eine Temperatur von mindestens 60°C erfolgt.

9. Verfahren nach einem der Ansprüche 1 bis 8, **dadurch gekennzeichnet, dass** das Zusammenfügen von zumindest zwei stirnseitig beschichteten Hohlprofilen in einem Winkel unter einem Druck von 0,1 bis 5 bar erfolgt.

10. Verfahren nach einem der Ansprüche 1 bis 9, **dadurch gekennzeichnet, dass** als Hohlprofil ein Kunststoffhohlprofil verwendet wird.

11. Verfahren nach Anspruch 10, **dadurch gekennzeichnet, dass** als Hohlprofil ein Polyvinylchlorid- oder Polypropylen-Hohlprofil verwendet wird.

12. Verfahren nach einem der Ansprüche 1 bis 9, **dadurch gekennzeichnet, dass** als Hohlprofil ein Metallhohlprofil verwendet wird.

13. Verfahren nach Anspruch 12, **dadurch gekennzeichnet, dass** als Hohlprofil ein Aluminium-Hohlprofil verwendet wird.

14. Verfahren nach einem der Ansprüche 1 bis 9, **dadurch gekennzeichnet, dass** als Hohlprofil ein Sandwichhohlprofil, bestehend aus einer Kombination von zumindest zwei Materialien ausgewählt aus der Gruppe umfassend Kunststoffe, Metalle, Holz und Naturstein, verwendet wird.

15. Verfahren nach Anspruch 14, **dadurch gekennzeichnet, dass** als Hohlprofil ein Sandwichhohlprofil bestehend aus einer Kombination von zumindest zwei Materialien ausgewählt aus Polyvinylchlorid, Polypropylen, Melamin, Kunstmarmor, Aluminium, Holz und Naturstein, verwendet wird.

16. Verfahren nach einem der Ansprüche 1 bis 15, **dadurch gekennzeichnet, dass** als Hohlprofil ein Hohlprofil mit einem Einlageprofil bestehend aus Kunststoff, Metall, Leichtbeton oder andere Verfüllmaterialien verwendet wird.

17. Verfahren nach Anspruch 16, **dadurch gekennzeichnet, dass** als als Hohlprofil ein Hohlprofil mit einem Einlageprofil bestehend aus geschäumtem Polyurethan, verzinktem Stahl oder Aluminium verwendet wird.

## Claims

1. A method for the gap-bridging joining of hollow sections, which method comprises the following steps:
• cutting the hollow section to lengths
• applying a post-crosslinking hot-melted adhesive on the front side of the hollow section for providing a coating
• joining the at least two front-side coated hollow sections under an angle under pressure.

2. A method according to claim 1 for the production of window or door frames and wings of a window, respectively.

3. A method according to claim 1 or 2, **characterised in that** after applying a post-crosslinking hot-melted adhesive on the front side of the hollow section, this coating is thermally reactivated.

4. A method according to any one of claims 1 to 3, **characterised in that** the hollow section is cut to lengths by means of a mitre.

5. A method according to any one of claims 1 to 4, **characterised in that** a hot-melted adhesive based on polyurethan is used as post-crosslinking hot-melted adhesive.

6. A method according to any one of claims 1 to 4, **characterised in that** a hot-melted adhesive based on polyolefin is used as post-crosslinking hot-melted adhesive.

7. A method according to any one of claims 1 to 6, **characterised in that** the application of the post-crosslinking hot-melted adhesive is effected by passing the front side of the hollow section along a heating roller coated with the hot-melted adhesive.

8. A method according to any one of claims 1 to 7, **characterised in that** the thermal reactivation of the coating occurs by heating the same to a temperature of at least 60°C.

9. A method according to any one claims 1 to 8, **characterised in that** the joining of at least two front-side coated hollow sections occurs under an angle under a pressure of 0.1 to 5 bar.

10. A method according to any one of claims 1 to 9, **characterised in that** a hollow section made of plastics is used as the hollow section.

11. A method according to claim 10, **characterised in that** a polyvinylchlorid or polypropylen hollow section is used as the hollow section.

12. A method according to any one of claims 1 to 9, **characterised in that** a metal hollow section is used as the hollow section.

13. A method according to claim 12, **characterised in that** an aluminium hollow section is used as the hollow section.

14. A method according to any one of claims 1 to 9, **characterised in that** a sandwich hollow section consisting of a combination of at least two materials selected from the group comprising plastics, metal, wood and natural stone is used as the hollow section.

15. A method according to claim 14, **characterised in that** a sandwich hollow section consisting of a combination of at least two materials selected from polyvinylchlorid, polypropylen, melamine, artificial marble, aluminium, wood and natural stone, is used as the hollow section.

16. A method according to any one of claims 1 to 15, **characterised in that** a hollow section with an insert section consisting of plastics, metal, light-weight concrete or other filling materials, respectively, is used as the hollow section.

17. A method according to claim 16, **characterised in that** a hollow section with an insert section consisting of foamed polyurethane, galvanised steel or aluminium, respectively, is used as the hollow section.

## Revendications

1. Procédé d'assemblage de profilés creux par pontage de fentes, ce procédé comprenant les étapes suivantes :
• coupe à la longueur du profilé creux,
• application d'un adhésif à chaud à réticulation ultérieure sur la face frontale du profilé creux pour prévoir un revêtement,
• assemblage d'au moins deux profilés creux à face frontale revêtue dans un angle sous pression.

2. Procédé selon la revendication 1 pour la fabrication de cadres de fenêtres ou de portes et/ou de battants de fenêtres.

3. Procédé selon la revendication 1 ou 2, **caractérisé en ce qu'**après l'application d'un adhésif à chaud à réticulation ultérieure sur la face frontale du profilé creux, ce revêtement est réactivé de manière thermique.

4. Procédé selon l'une quelconque des revendications 1 à 3, **caractérisé par le fait que** le profilé creux est mis à la longueur pour prévoir un biais.

5. Procédé selon l'une quelconque des revendications 1 à 4, **caractérisé en ce qu'**un adhésif à chaud à base de polyuréthane est utilisé comme adhésif à chaud à réticulation ultérieure.

6. Procédé selon l'une quelconque des revendications 1 à 4, **caractérisé en ce qu'**un adhésif à chaud à base de polyoléfine est utilisé comme adhésif à chaud à réticulation ultérieure.

7. Procédé selon l'une quelconque des revendications 1 à 6, **caractérisé en ce que** l'application de l'adhésif à chaud à réticulation ultérieure est effectuée en faisant passer la face frontale du profilé creux sur un rouleau chauffant revêtu de l'adhésif à chaud.

8. Procédé selon l'une quelconque des revendications 1 à 7, **caractérisé en ce que** la réactivation thermique du revêtement a lieu par réchauffement de ce dernier à une température d'au moins 60°C.

9. Procédé selon l'une quelconque des revendications 1 à 8, **caractérisé en ce que** l'assemblage d'au moins deux profilés creux revêtus sur leur face frontale a lieu dans un angle sous une pression de 0,1 à 5 bars.

10. Procédé selon l'une quelconque des revendications 1 à 9, **caractérisé en ce qu'**un profilé creux en matière plastique est utilisé comme profilé creux.

11. Procédé selon la revendication 10, **caractérisé en ce qu'**un profilé creux en chlorure de polyvinyle ou en polypropylène est utilisé comme profilé creux.

12. Procédé selon l'une quelconque des revendications 1 à 9, **caractérisé en ce qu'**un profilé creux en métal est utilisé comme profilé creux.

13. Procédé selon la revendication 12, **caractérisé en ce qu'**un profilé creux en aluminium est utilisé comme profilé creux.

14. Procédé selon l'une quelconque des revendications 1 à 9, **caractérisé en ce qu'**un profilé creux en sandwich, composé d'une combinaison d'au moins deux matériaux sélectionnés dans le groupe comprenant des matières plastiques, des métaux, du bois et de la pierre naturelle est utilisé comme profilé creux.

15. Procédé selon la revendication 14, **caractérisé en ce qu'**un profilé creux en sandwich, composé d'une combinaison d'au moins deux matériaux sélectionnés parmi le chlorure de polyvinyle, le polypropylène, la mélamine, le marbre artificiel, l'aluminium, le bois et la pierre naturelle est utilisé comme profilé creux.

16. Procédé selon l'une quelconque des revendications 1 à 15, **caractérisé en ce qu'**un profilé creux avec un profilé intercalaire composé de matière plastique, de métal, de béton léger ou d'autres matériaux de remplissage est utilisé comme profilé creux.

17. Procédé selon la revendication 16, **caractérisé en ce qu'**un profilé creux avec un profilé intercalaire composé de polyuréthane expansé, d'acier zingué ou d'aluminium est utilisé comme profilé creux.
